# EUROPÄISCHE PATENTSCHRIFT

(11) **EP 2 152 920 B1**
(45) Veröffentlichungstag und Bekanntmachung des Hinweises auf die Patenterteilung: **19.12.2012**
(21) Anmeldenummer: 08757960.3
(22) Anmeldetag: 17.04.2008
(51) Int. Cl.: C22B 1/24, C22B 1/248, C22B 7/02

(54) **VERFAHREN ZUR HERSTELLUNG VON BINDEMITTELLOSEN BRIKETTS AUS METALLSPÄNEN UND METALLSTÄUBEN**
METHOD FOR PRODUCING BINDERLESS BRIQUETTES MADE UP OF METAL CHIPS AND METAL DUSTS
PROCÉDÉ DE FABRICATION DE BRIQUETTES SANS LIAN EN COPEAUX MÉTALLIQUES ET POUSSIÈRES MÉTALLIQUES

(30) Priorität: 11.05.2007 DE 102007022682
(43) Veröffentlichungstag der Anmeldung: 17.02.2010
(73) Patentinhaber: Egon Evertz K.G. (GmbH & CO), 42651 Solingen (DE)
(72) Erfinder: EVERTZ, Egon, 42653 Solingen (DE); EVERTZ, Ralf, 42799 Leichlingen (DE); EVERTZ, Stefan, 42659 Solingen (DE)
(74) Vertreter: Vomberg, Friedhelm
(86) Internationale Anmeldenummer: PCT/DE2008/000657
(87) Internationale Veröffentlichungsnummer: WO 2008/138295

(56) Entgegenhaltungen:
- EP-A- 1 329 524
- DE-A1- 4 416 699
- SU-A1- 1 595 630
- SU-A3- 1 806 211
- US-A1- 2004 067 155

## Beschreibung

Bereits in der DE 37 32 351 A1 wird ein Verfahren zur Herstellung von bindemittellosen Briketts für den Einsatz in eine Verhüttung aus metallisches Eisen enthaltenden feinkörnigen Stahlwerkstäuben beschrieben, die aufgeheizt und im heißen Zustand auf einer Walzenbrikettierpresse brikettiert und anschließend abgekühlt werden. Um eine Reoxidation zu vermeiden, soll dies unter inerter Atmosphäre geschehen.

Nachteiligerweise ist hierzu ein für die Erwärmung auf über 500° Brikettiertemperatur erhebliche Energiemenge notwendig.

Ein ähnliches Verfahren wird in der US 2004/0067155 A1 beschrieben, bei dem zunächst lose Metallspäne in einer Mulde zu einem Brikett verpresst werden, das anschließend in einer Kapsel zu einem Barren verarbeitet wird, wozu die Kapsel eine Temperatur zwischen 900°C und 1.080°C aufweist.

Die DE 44 16 699 A1 beschreibt ein Verfahren zur Verwertung von metallischem Restmaterial, insbesondere Spanmaterial in Schmelzöfen, bei dem das zu rezirkulierende kleinteilige Spanmaterial zusammen mit schlacke- und/oder brennstoffbildendem Staub, vorzugsweise SiO₂-haltigen, aus Filteranlagen stammendem Staub, verpresst wird, wobei eine Beimischung von bis zu 15 Gewichts%, vorzugsweise 5 bis 10 Gewichts% Staub zum zu verpressenden Materialgemenge erfolgt. Bei diesem Verfahren ist die Menge an Metallstäuben stark eingeschränkt.

Versuche, z. B. in Schleifprozessen anfallende Metallstäube ohne weitere Zugaben zu einem Brikett zu pressen, scheiterten an der fehlenden Formbeständigkeit des Pressproduktes. Bereits geringe Stöße oder sonstige Krafteinwirkungen auf einen aus reinen Stäuben hergestellten Brikettkörper führten zu einem Aufbrechen. Die Alternative, Klebstoffe beizugeben, ist aufwendig und impliziert ferner, dass bei der Weiterverwendung der Stäube zuvor die Klebstoffe durch Erhitzung wieder entfernt werden müssen.

In Zeiten ständig wachsender Rohstoffpreise besteht ein dringendes Bedürfnis insbesondere teure Metalle und Metalllegierungen, die in Zerspanungsabfällen, insbesondere beim Schleifen anfallenden Abfällen enthalten sind, wieder nutzbar zu machen. Voraussetzung hierfür ist jedoch eine feste Formgebung, durch die eine Lager- sowie Transportfähigkeit ohne Gefahr einer Bruchzersetzung gegeben ist. Entsprechendes gilt auch hinsichtlich der sich in Filtern ansammelnden Stäube, die aus metallverarbeitenden Prozessen stammen.

Es ist Aufgabe der vorliegende Erfindung ein Verfahren anzugeben, mit denen auf wirtschaftliche und einfach handhabbare Weise Metallspäne und -stäube beliebiger Zusammensetzung zu einer transportfähigen Form ohne Zusatz von Additiven verarbeitet werden können.

Diese Aufgabe wird dadurch gelöst, dass die vorhandenen Metallspäne in eine becherförmige Form gepresst werden und der dadurch entstandene, nach oben offene Hohlraum mit Metallstaub aufgefüllt wird, wonach die Öffnung mit einem aus gepressten Metallspänen bestehenden Deckel verschlossen wird. Diesem Verfahren liegt der erfinderische Gedanke zugrunde, dass Metallspäne aufgrund ihrer natürlichen Festigkeit und Verformbarkeit sehr gut zu einem formbeständigen Körper gepresst werden können, der im vorliegenden Fall als zerstörungsresistente Hülle für die Metallstäube dient. Je nach prozentualem Anteil der Metallstäube in Relation zu den Metallspänen wird der verschließbare innere Hohlraum des becherförmigen Metallspäne-Behälters gewählt. Da die becherförmige Form ohnehin durch einen Deckel verschlossen wird, ist es nicht zwingend notwendig, den eingefüllten Metallstaub durch Pressen zu verdichten, was jedoch empfehlenswert ist, um das Füllvermögen des Bechers optimal ausnutzen zu können. Vorteilhafter Weise ist bei dieser Verfahrenstechnik keinerlei Erwärmung des zu verpressenden Metallgutes erforderlich, noch müssen klebstoffartige Bindemittel verwendet werden, die vor einer Wiederverwertung wieder ausgetrieben werden müssen.

Nach einer Weiterbildung der Erfindung werden die Metallspäne zu einem mit der Becherform korrespondierenden Deckel gepresst, der anschließend mit der offenen Becherform verpresst wird, wobei vorzugsweise der Pressdruck am Rande des Deckels aufgegeben wird. Alternativ hierzu können lose Metallspäne auf dem in der Becherform befindlichen Metallstaub und auf dem Becherrand verteilt werden und anschließend mit einer Presse zu einem verschließenden Deckel geformt werden.

Im erstgenannten Fall wird somit der Deckel separat aus Metallspänen geformt, bevor er mit dem offenen becherförmigen Metallspäne-Behälter durch Pressen verbunden wird. Dieses Verfahren bietet sich insbesondere dann an, wenn der Hohlraum des offenen Metallspäne-Behälters nicht vollständig mit bereits vorverdichteten Metallspänen gefüllt ist. Ist hingegen der Metallspäne-Behälter vollständig mit bereits verdichteten Metallstäuben aufgefüllt, so dass der Becherrand und die Metallstäube eine im wesentlichen geschlossene Ebene liefern, durch die die für das Pressen notwendige Reaktionskraft aufgebracht werden kann, empfiehlt sich die Deckelanformung nach der zweiten genannten Methode. Wesentlich ist jedenfalls, dass die hergestellten brikettähnlichen Formen eine äußere, im wesentlichen aus Metallspänen bestehende fest Hülle besitzen, die auch gegen Druck und Schlagbeanspruchung relativ formbeständig ist. Selbstverständlich muss diese Becherform nicht vollständig aus Metallspänen bestehen, sofern enthaltende Metallstäube einen geringen Prozentsatz von 5 bis 10% nicht übersteigen.

Besonders ist darauf hinzuweisen, dass die erfindungsgemäße Becherform bis hin zu einer Tellerform beliebig gestaltet werden kann, sofern jeweils ein an die vorhandene Menge der Metallstäube angepasster Hohlraum zur Verfügung steht.

Vorzugsweise besteht das in den Fertigungsprozess zurückführbare Produkt aus bindemittellosen Briketts, die einen Becher aus verpressten Metallspänen, einen Deckel aus verpressten Metallspänen und einen mit Metallstaub befüllten Hohlraum besitzen. Vorzugsweise besitzen der Becher und/oder der Deckel eine Wandstärke von mindestens 4 cm. Das Brikett aus Metallspänen mit eingefülltem Metallstaub kann beliebige Formen, insbesondere eine Zylinderform, eine Kegelform, eine Quaderform oder eine Barrenform besitzen. Sogenannte Hinterschnitte, die mittels eines Pressdruckes schlecht erreichbar sind, sollten vermieden werden.

Zur Herstellung des genannten bindemittellosen Briketts wird eine Vorrichtung verwendet, die mindestens eine Matrize und mindestens eine dazu korrespondierende Patrize umfasst, wobei die Matrize und die korrespondierende Patrize zylinderförmig, kegelförmig, quaderförmig oder trapezförmig ausgebildet sind, so dass die in die Matrize einführbaren Metallspäne durch die Patrize zu einem Becher mit einer Wandstärke von mindestens 4 cm verpressbar sind, wobei die Vorrichtung eine zusätzliche Presse aufweist, mit der Metallspäne zu einem verschließenden Deckel verpressbar sind. Der Deckel aus verpressten Metallspänen wird entweder in einer separaten Pressvorrichtung hergestellt, bevor er auf die bereits in der Matrize hergestellte Becherform aufgelegt und mittels einer korrespondierenden Patrize angepresst wird. Alternativ hierzu besteht die Möglichkeit, dass in ein und derselben Pressvorrichtung zunächst die Becherform aus Metallspänen hergestellt wird, anschließend der becherförmige Hohlraum bis zum Rand bzw. unter Berücksichtigung der Kompressibilität angehäuft mit Metallstaub aufgefüllt wird, anschließend der Staub verdichtet, die Metallspäne auf den Becherrand sowie die verdichteten Metallstäube aufgestreut und dann verdichtet werden oder die Metallspäne unmittelbar auf die Metallstäube als abdeckende Schicht aufgestreut und dann zusammen mit den Metallstäuben verdichtet werden. Die Matrize hat entsprechende Negativformen, die den gewünschten Positivformen der herzustellenden Briketts entsprechen.

Weitere Ausführungsbeispiele sind in den Zeichnungen dargestellt. Es zeigen:
- Fig. 1: einen Querschnitt durch eine Matrize, eine Patrize und eine gepresste Becherform,
- Fig. 2: eine perspektivische Darstellung einer zylinderförmigen Becherform,
- Fig. 3a: einen mit Metallstaub befüllter Becher, der mit losen Metallspänen bedeckt ist und einen Stempel,
- Fig. 3b: einen mit Metallstaub befüllten Becher, und einen aus Metallspänen bestehenden vorgepressten Deckel (in Explosivdarstellung),
- Fig. 4: einen Querschnitt durch ein mit Metallstaub gefülltes Brikett,
- Fig. 5a: eine trapezförmige Becherform und
- Fig. 5b: eine würfel- oder quaderförmige Becherform.

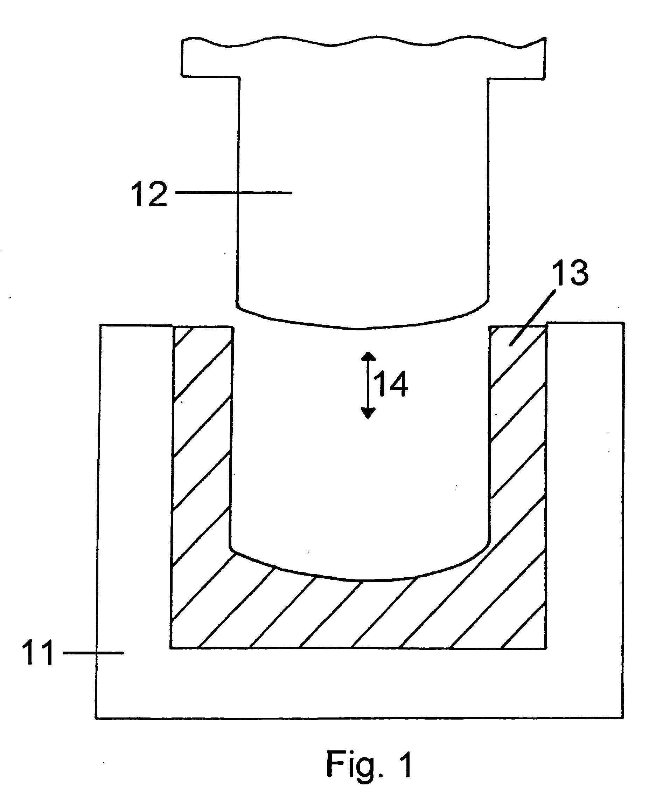

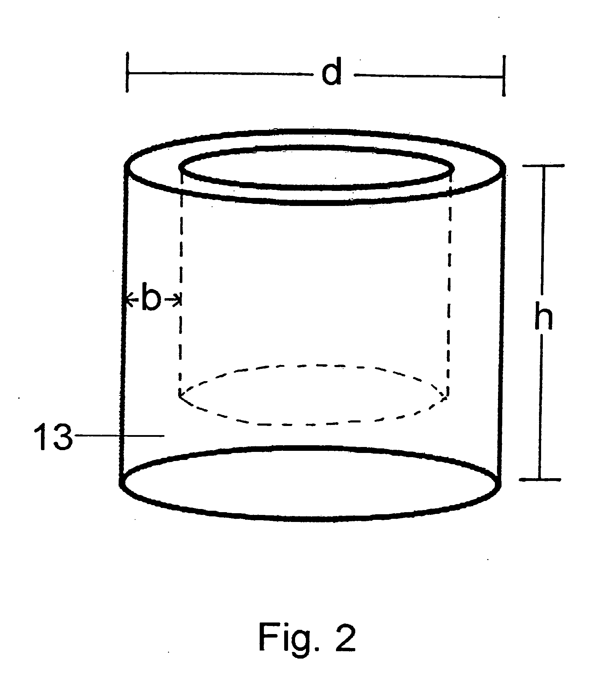

In Figur 1 ist schematisch das Pressverfahren zu Herstellung einer Becherform 13 dargestellt. Lose Metallspäne werden dazu in den Hohlraum einer Matrize 11 gefüllt. Durch Druckausübung mit der Patrize 12, die in der Richtung 14 beweglich gelagert ist, werden die Metallspäne in eine formbeständige einseitig offene Becherform 13 gepresst. Eine perspektivische Darstellung der hergestellten Becherform 13 zeigt Figur 2. Der Becher 13 hat bei der hier dargestellten zylindrischen Grundform die Höhe h, den äußeren Durchmesser d und die Wanddicke b.

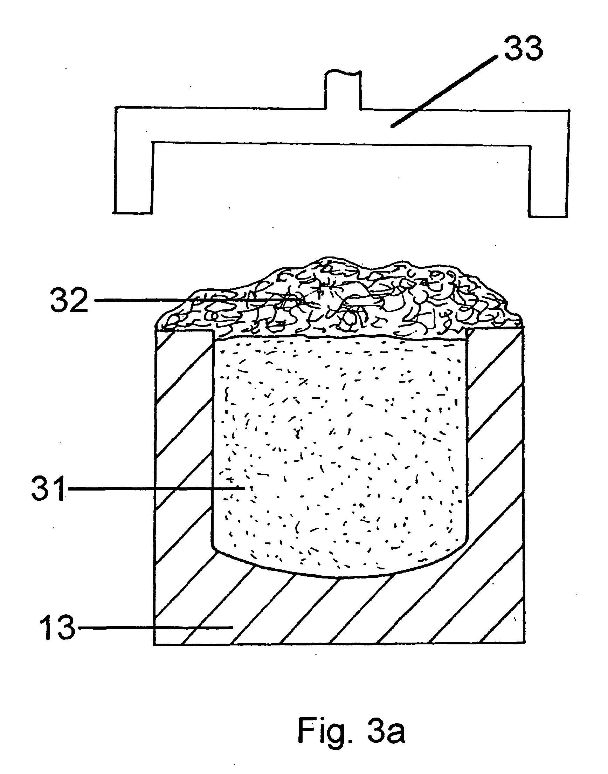

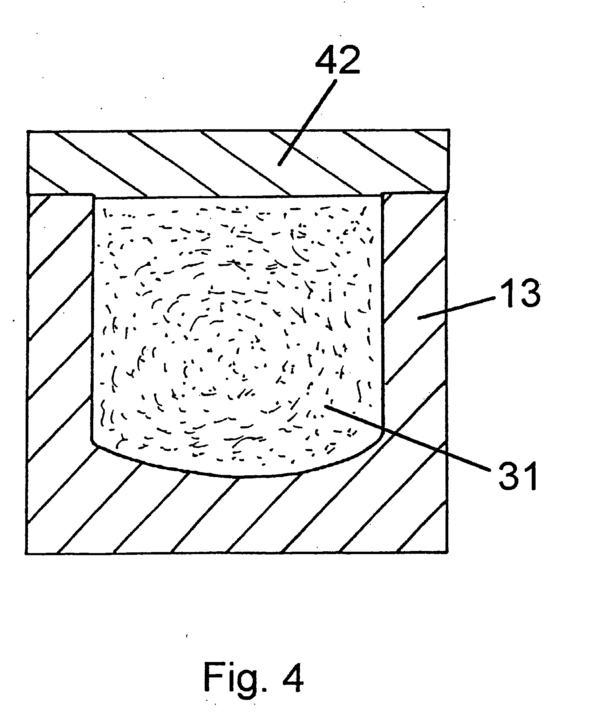

Nach dem Befüllen des aus losen Metallspänen geformten Bechers 13 mit Metallstaub 31 sind zwei alternative Möglichkeiten vorgesehen, den Becher 13 zu einem Brikett zu verschließen. Fig. 3a zeigt schematisch die Möglichkeit lose Metallspäne 32 auf den gefüllten Becher zu häufen, die anschließend von einem Stempel 33 zu einem kompakten und verschließenden Deckel 42 (vgl. Fig. 4) direkt auf den Becher 13 gepresst wird. Vorteilhaft an dieser Ausführungsform ist, dass kein Zwischenraum zwischen dem Deckel 42 und der Oberkante des Metallstaubes 31 entsteht, wodurch das zur Verfügung stehende Volumen optimal ausgeschöpft wird.

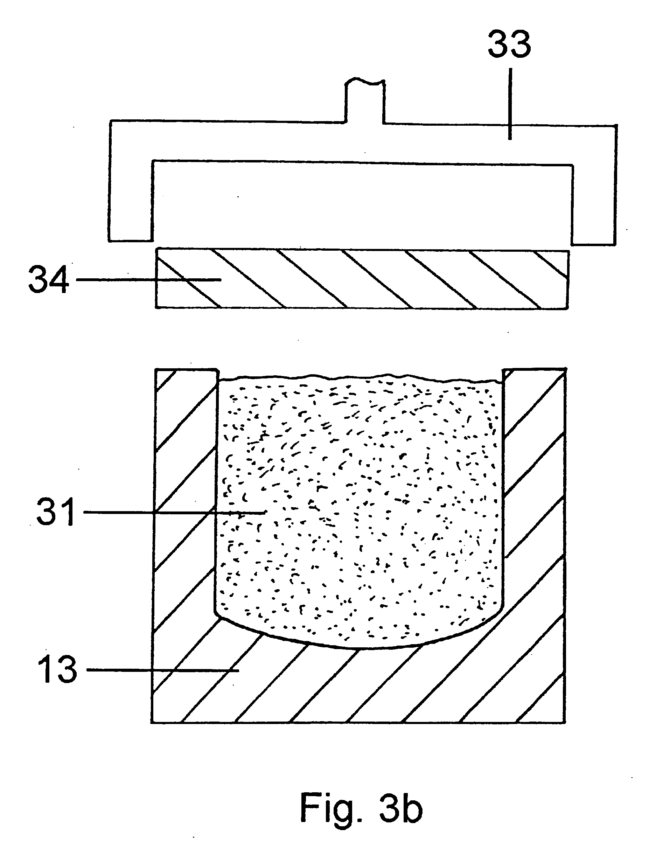

Gemäß Fig. 3b ist eine weitere Ausgestaltung derart vorgesehen, dass ein aus Metallspänen 32 vorgeformter und aus Metallspänen vorgepresster Deckel 34 mit einem Stempel 33 auf den Becher 13 gepresst wird, so dass ein verschlossenes Brikett entsteht. Vorteilhaft an dieser Ausführungsform ist, dass der Füllgrad an Metallspänen beliebig variiert werden kann.

Beiden Verfahren ist jedoch gemein, dass ein verschlossenes und mit Metallstaub 31 gefülltes Brikett 41 hergestellt wird, wie es in Fig. 4 schematisch dargestellt ist.

Die Metallspäne und die Metallstäube können aus verschiedenen Prozessen stammen und in beliebiger Weise zusammengestellt werden, so dass über die chemische Zusammensetzung der Metallspäne und der Metallstäube und deren prozentualen Anteilen für weiterverarbeitende Prozesse, in denen die Briketts durch Einschmelzen eingeführt werden, gewünschte Dotierungen einstellbar sind.

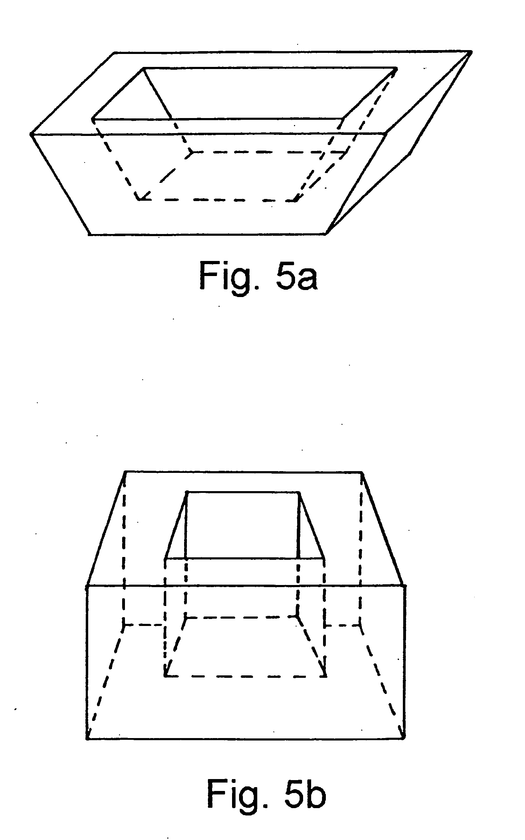

Weitere Ausführungsformen in Form von trapezförmigen oder würfel- bzw. quaderförmige Briketts sind beispielhaft in den Figuren 5a und 5b dargestellt.

### Bezugszeichenliste

- 11: Matrize
- 12: Patrize
- 13: Becher aus gepressten Metallspänen
- 14: Bewegungsrichtung der Patrize

- 21: zylinderförmiger Becher

- 31: Metallstaub
- 32: Metallspäne
- 33: Stempel
- 34: vorgepresster Deckel

- 41: Brikett
- 42: Deckel

- 51: trapezförmiges Brikett
- 55: würfel- bzw. quaderförmiges Brikett

## Patentansprüche

1. Verfahren zur Herstellung von bindemittellosen Briketts aus Metallspänen und Metallstäuben,
**dadurch gekennzeichnet, dass**
die Metallspäne in eine becherförmige Form (13) gepresst werden und der dadurch entstandene nach oben offene Hohlraum mit Metallstaub (31) aufgefüllt wird, wonach die Öffnung mit einem aus gepressten Metallspänen bestehenden Deckel (42) verschlossen wird.

2. Verfahren nach Anspruch 1, **dadurch gekennzeichnet, dass** Metallspäne zu einem mit der Becherform korrespondierenden Deckel (34) gepresst werden und der Deckel (34) anschießend mit der Becherform verpresst wird, wobei der Pressdruck am Rand des Deckels aufgegeben wird.

3. Verfahren nach Anspruch 1, **dadurch gekennzeichnet, dass** lose Metallspäne (32) auf dem in der Becherform befindlichen Metallstaub (31) und auf dem Becherrand (13) verteilt werden und die Metallspäne anschließend mit einer Presse (33) zu einem verschließenden Deckel verpresst werden.

## Claims

1. Method for producing binderless briquettes made up of metal chips and metal dusts, **characterized in that** the metal chips are pressed into a cup-shaped form (13) and the upwardly open cavity produced as a result is filled with metal dust (31), after which the opening is closed with a cover (42) consisting of pressed metal chips.

2. Method according to claim 1, **characterized in that** metal chips are pressed into a cover (34) that corresponds to the cup form and the cover (34) is subsequently pressed with the cup form, the pressing pressure preferably being applied at the rim of the cover.

3. Method according to claim 1, **characterized in that** loose metal chips (32) are distributed on the metal dust (31) located in the cup form and on the rim (13) of the cup and the metal chips are subsequently pressed into a closable cover by means of a press (33).

## Revendications

1. Procédé de fabrication de briquettes dépourvues de liant, à partir de copeaux métalliques et de poussières métalliques, **caractérisé par le fait que** les copeaux métalliques sont pressés dans un moule en forme de gobelet (13) et que l'espace creux ouvert vers le haut qui est créé ainsi est rempli de poussière métallique (31), après quoi l'ouverture est fermée par un couvercle (42) fait de copeaux métalliques pressés.

2. Procédé selon la revendication 1, **caractérisé par le fait que** des copeaux métalliques sont pressés pour former un couvercle (34) correspondant au moule en gobelet et que, ensuite, ledit couvercle (34) est relié par pressage avec ledit moule en gobelet, la pression de pressage étant appliquée au bord dudit couvercle.

3. Procédé selon la revendication 1, **caractérisé par le fait que** des copeaux métalliques (32) en vrac sont répartis sur la poussière métallique (31) se trouvant à l'intérieur du moule en gobelet ainsi que sur le bord du gobelet (13) et que, ensuite, les copeaux métalliques sont pressés ensemble au moyen d'une presse (33) pour former un couvercle fermant.
